# EUROPÄISCHE PATENTANMELDUNG

(11) **EP 3 290 828 A1**
(43) Veröffentlichungstag der Anmeldung: **07.03.2018**
(21) Anmeldenummer: 17000817.1
(22) Anmeldetag: 12.05.2017
(51) Int. Cl.: F25B 15/04, F25B 30/04, F25B 40/00, F25B 47/00

(54) **AMMONIAK/WASSER-ABSORPTIONSKÄLTEMASCHINE**

(30) Priorität: 03.09.2016 DE 102016010741
(71) Anmelder: Eco ice Kälte GmbH, 04552 Borna (DE)
(72) Erfinder: BRAUN, Rainer, D- 45721 Haltern am See (DE); OTTO, Peter, D- 04779 Wermsdorf (DE)
(74) Vertreter: Kraft, Werner

(57) **Zusammenfassung**

Die Erfindung betrifft eine für Kälteleistungen zwischen 25 kW und 100 kW ausgelegte Ammoniak/Wasser- Absorptionskältemaschine, die Kälteträgertemperaturen unterhalb 0 °C ermöglicht und mit unterhalb 100 °C temperierter Wärme angetrieben wird.

Sie verfügt über eine auf die niedrige Antriebstemperatur zugeschnittene Kälteverfahrenstechnik, die innovativ nach dem Prinzip "intelligent simplicity" rigoros vereinfacht gestaltet ist und deshalb mit minimalem Investitionsaufwand realisiert werden kann. Die erfindungsgemäße Ammoniak/Wasser- Absorptionskältemaschine ist durch folgende Merkmale gekennzeichnet:
- Ausschließliche Anordnung von gelöteten Plattenwärmeaustauschern fachüblicher Konstruktion;
- Anordnung von Kältetechnik in minimaler Konfiguration, bestehend aus den Komponenten Austreiber, Separator, Kondensator, Verdampfer mit vorgeschaltetem Expansionsventil, Absorber mit vorgeschaltetem Drosselventil, Lösungswärmeaustauscher und Lösungspumpe;
- Betrieb aller Wärmeaustauscher im Gegenstrom;
- Übernahme der Funktionen des Kältemittelsammlers und des Lösungssammlers durch die verbindenden Rohrleitungen;
- Herstellung aller vom Ammoniak und von der Ammoniak/Wasser- Lösung berührten Flächen aus korrosionsbeständigem Edelstahl.

## Beschreibung

### Anwendungsgebiet

Die Erfindung betrifft eine für Kälteleistungen zwischen 25 kW und 100 kW ausgelegte Ammoniak/Wasser- Absorptionskältemaschine,
die Kälteträgertemperaturen unterhalb 0 °C ermöglicht und mit unterhalb 100 °C temperierter Wärme angetrieben wird. Sie verfügt über eine auf die niedrige Antriebstemperatur zugeschnittene Kälteverfahrenstechnik, die innovativ nach dem Prinzip "intelligent simplicity" rigoros vereinfacht gestaltet ist und deshalb mit minimalem Investitionsaufwand realisiert werden kann.

### Stand der Technik

Die weltweit zunehmend nachgefragte Nutzenergie Kälte wird bisher nahezu ausschließlich unter Aufwendung elektrischer Energie erzeugt. Diese wird benutzt, um die mechanischen Verdichter der üblicherweise eingesetzten Kaltdampf-Kompressionskältemaschinen mit Elektromotoren anzutreiben. Die hohen Kosten der elektrischen Energie und die Tatsache, dass diese Sekundärenergie sehr weitgehend durch Wandlung erschöpflicher, fossiler Primärenergie erzeugt wird, veranlassen dazu, zukünftig eine rationellere Technik der Kälteerzeugung anzuwenden. Als solche bietet sich die Sorptionstechnik an, die die mechanische Verdichtung durch eine thermische Verdichtung ersetzt und deshalb mit Wärme angetrieben werden kann.

Die von elektrischer Antriebsenergie weitgehend unabhängige Sorptionskältetechnik ist seit Langem bekannt. Sie wird mit periodisch arbeitenden Adsorptionsmaschinen, mit Wasser/Lithiumbromid- Absorptionsmaschinen und mit dem sogenannten Desiccative- Evaporative- Cooling bereits erfolgreich angewandt. Das hier einzusetzende Kältemittel ist Wasser, so dass Temperaturen nahe und unterhalb 0 °C nicht erreicht werden.

Dieses Defizit lässt sich jedoch durch die Verwendung des umweltfreundlichen Kältemittels Ammoniak, sein Ozone- Depletion- Potential (ODP) und sein Global-Warming- Potential (GWP) sind Null, mit Hilfe von Ammoniak/Wasser-Absorptionskältemaschinen überwinden.

Auch diese Art der Sorptionskältetechnik wird seit Langem praktiziert, zum Beispiel in der Diffusions- Absorptions-Kältemaschine, die sehr vorteilhaft mit einer Thermosyphonpumpe arbeitet, ansonsten aber eine kostenaufwändige Verfahrenstechnik benötigt, relativ hohe Antriebstemperaturen erfordert und nur bis etwa 10 kW Kälteleistung, insbesondere als Kühlschrank, umfangreich verfügbar ist.

Große Ammoniak/Wasser- Absorptionskältemaschinen sind schließlich in der Praxis ebenfalls vorhanden, allerdings sehr spärlich. Sie beschränken sich mit dem Ziel der Kostendegression auf hohe Antriebstemperaturen und auf Kälteleistungen oberhalb 200 kW. Sie enthalten voluminöse, schwere Wärmeübertrager, die in der Regel aus Kohlenstoffstahl gefertigt sind und deshalb mit umweltgiftigen Inhibitoren gegen Korrosion geschützt werden müssen. Sie sind zudem kostenaufwändig mit komplizierten Maschinenregelungen, zum Beispiel Bypassregelungen, und mit den Verfahrensschritten Rektifikation, Dephlegmation und Kondensatunterkühlung, die eine hohe Komplexität bewirken, ausgestattet. Vereinzelt wird sogar die sehr aufwändige Mehrstufigkeit gewählt. Energieeinsparend aus Wärme Kälte zu erzeugen, ist immer dann eine hervorragend effiziente Technik, wenn die Antriebswärme sowohl aus thermodynamischer Sicht als auch aus ökonomischer Sicht angemessen zur Verfügung steht und umgesetzt wird.

Die ökonomischen Bedingungen sind die kostengünstige Verfügbarkeit der Antriebswärme, der ausreichend niedrige Investitionsbedarf und die ausreichend ausgedehnte Kälteproduktionszeit.

Die thermodynamische Bedingung ist die ausreichende Ausnutzung der in der Antriebswärme vorhandenen Exergie und nicht etwa das COP (Coefficient of Performance) genannte Wärmeverhältnis der erzeugten Kälteleistung zur Antriebswärmeleistung. Letztere besteht aus wenig Exergie und viel Anergie und ist wesentlich weniger wertvoll als die elektrische Antriebsleistung einer Verdichterkältemaschine. Man spricht von Abfallwärme und Abwärmenutzung und begründet damit die Nachrangigkeit der Bemühung um eine hohe Effektivität COP hinter dem Bemühen um einen niedrigen Investitionsaufwand.

Ein großer, zukünftig von Ammoniak/Wasser- Absorptionskältemaschinen zu deckender Bedarf betrifft die industrielle Prozesskälte, die vielfältige gewerbliche Kälteversorgung, die Lagerung von Lebensmitteln und die Kältespeicherung in kompakten, unterhalb 0 °C betriebenen Kältespeichern. Ausschlaggebend ist der notwendige Synchronismus zwischen der Kälteerzeugung und der Vorort- Nutzung niedrig temperierter, das heißt, kostengünstig verfügbarer Antriebswärme, deren Transport über große Strecken ansonsten nicht in Frage kommt, zum Beispiel die im Temperaturbereich 90 °C bis 70 °C über das Kühlwasser verfügbare Abwärme eines Verbrennungsmotors.

Es werden also Ammoniak/Wasser- Absorptionskältemaschinen benötigt, die passgenau zu dezentralen, d.h., kleinen Energiesystemen kleine Kälteleistungen im Bereich von 25 kW bis 100 kW liefern, die Kälteträgertemperaturen unterhalb 0 °C ermöglichen, die sich mit Antriebstemperaturen unterhalb 100 °C begnügen und die mit einem geringen Investitionsbedarf wirtschaftlich produziert werden können. Diese Kältemaschinen sind bis heute nicht verfügbar.

Die besonders herausragenden Nutzungswege derartiger Ammoniak/Wasser-Absorptionskältetechnik sind die solarthermisch betriebene, sogenannte solare Kühlung im Sonnengürtel der Erde, der kaskadenartige Einsatz noch nutzbarer, sonst als Abwärme in die Umgebung fließende Restwärme und die Kraft- Wärme-Kälte- Kopplung, das heißt, die Nutzung des Koppelproduktes Wärme aus einer Kraft- Wärme- Kopplung. Letzteres macht wegen der gebotenen Umwelt- und Ressourcenschonung immer dann Sinn, wenn dem Koppelprodukt Wärme weniger fossile Primärenergie anzurechnen ist als der elektrischen Antriebsenergie der konkurrierenden Verdichterkältemaschine. Bei einer stromgeführten Kraft- Wärme- Kopplung, deren Betrieb vorrangig auf die Funktion der Eigenstromerzeugung eines "Independent Power Producers" ausgerichtet ist, ist diese Situation gegeben: Die bei nicht vorhandenem Wärmebedarf nur zur Stromerzeugung genutzte Anlage wird durch die mit Abwärme betriebene Kälteerzeugung in den effizienten Modus der Kraft- Wärme- Kopplung zurückgeführt.

Die zukünftig die Energiewirtschaft prägende dezentrale, lokale Eigenstromerzeugung, ausgeführt in entsprechend kleinen Anlagen, eingebunden in das vorhandene Verteilnetz, oder als Insellösung, oder geschaltet als virtuelles Kraftwerk, hat gewichtige Vorteile.

Sie ermöglicht ein wirksames Demand und auch Supply Side Management bei der Nutzung der zentralen Netzversorgung, damit die Reduzierung der Kosten des Strombezuges, die Absicherung gegen Stromausfälle und gegen mangelhafte Netzstabilität, ferner die Einsparung von Netzbaukosten und von Netzverlusten sowie schließlich auch die Möglichkeit der Vorort- Nutzung anfallender niedrig temperierter Abwärme zur Erzeugung niedrig temperierter Kälte. Natürlich lässt sich damit auch die Funktion der Gebäudekühlung oberhalb 0 °C erfüllen. Hier sollte die Technik dann vorrangig auf die durch die Kältespeicherung bei tiefer Temperatur gegebenen Möglichkeit zielen, bei sehr geringer Inanspruchnahme kostspieligen umbauten Raumes effizient Energie zu speichern. Wobei davon auszugehen ist, dass sich in den zukünftigen, dezentral ausgerichteten Energieversorgungsystemen für die Kältespeichertechnik, die ja im Hinblick auf die konventionelle, elektrisch betriebene Kältetechnik einem elektrischen Energiespeicher gleichkommt, ein umfangreicher Bedarf ergeben wird.

Lösungen der Ammoniak/Wasser-Absorptionskältetechnik, die den erläuterten Potentialen gerecht werden, gehören bis heute nicht zum Stand der Technik.

Es ist jedoch festzustellen, dass die erforderlichen thermodynamischen Grundlagen und zahlreiche Möglichkeiten der technische Realisierung bekannt sind.

Eine ausführliche Darstellung bietet [Plank, R. (Herausgeber): Handbuch der Kältetechnik, Band 7, Niebergall, W.: Sorptions-Kältemaschinen. Springer Verlag Berlin, Göttingen, Heidelberg 1959].

Auch im Patentschrifttum dokumentieren zahlreiche Veröffentlichungen den diesbezüglich erreichten Stand der Technik.

In den Druckschriften DE 100 25 530, EP 1367339, DE 10 2004 056 484,

DE 20 2007 007 999 und DE 10 2011 050 309 werden komplexe kälteverfahrenstechnische Lösungen beschrieben, die auf hochtemperierte Antriebswärme zugeschnitten sind und diese mit großem apparativen Aufwand, das heißt, mit großem Investitionsaufwand umsetzen, um eine hohe, durch das Verhältnis Kälteleistung/Antriebswärmeleistung gekennzeichnete Effektivität zu erreichen, wobei die angestrebte Wirtschaftlichkeit sich ausschließlich mit der durch große Leistungseinheiten möglichen Kostendegression erzielen lässt.

In der DE 10 2009 023 929, der EP 2438367 und der WO 2010139444 wird, abzielend auf eine sogenannte minimale Komplexität, ein Absorptionskälteaggregat vorgeschlagen, das neben der Lösungspumpe, dem Austreiber, dem Kondensator, dem Verdampfer, dem Absorber und dem Lösungswärmeaustauscher auch noch einen Dephlegmator und einen Kältemittelunterkühler enthält und zudem alle Wärmeaustauscher als aufwändige Plate & Shell-Wärmeaustauscher vorsieht, also als vollverschweißte Plattenpakete, die in einem Mantelrohr angeordnet sind. Nur bei Antriebstemperaturen unterhalb 100 °C sei der Dephlegmator und bei Kälteleistungen unterhalb 100 kW sei der Kältemittelunterkühler entbehrlich. Aber auch hier sind alle Wärmeaustauscher voluminöse, schwere Plate & Shell- Wärmeaustauscher, die die vor allem bei Kälteleistungen unterhalb 100 kW anzustrebenden geringen Aggregatabmessungen verhindern und darüber hinaus einen großen Investitionsaufwand verursachen, während in ihrem Vorteil der hohen Robustheit keine Relevanz zu erkennen ist.

Es wird nicht berichtet über die bei der Realsierung der kältetechnischen Verfahrenstechnik zu lösenden Teilaufgaben, nämlich über die Regelung der Kältemaschine, über die Separation der Nassdampfphasen hinter dem Austreiber, über die Verdampfung des Kältemittels in Anwesenheit eines Lösungsmittelrestes, über die die Bauhöhe des Absorptionskälteaggregates bestimmende Durchströmungsrichtung im Verdampfer, über die Absorption des Kältemittels und über die Beherrschung des bei einer Verwendung des binären Stoffsystems Ammoniak/Wasser gegebenen Korrosionsproblems. Ansonsten entsprechen die dargelegten kältetechnischen Verfahrensschritte und deren Abfolge dem Stand der Technik.

In der DE 199 21 469 ist eine Ammoniak/Wasser- Absorptionskälteanlage beschrieben, deren Lösungskreislauf mit Bauteilen aus korrosionsbeständigen, legierten Stählen ausgeführt ist und die als Verdampfer und als Kondensator in Flachplatten- Bauweise hergestellte, nicht näher spezifizierte Plattenwärmeübertrager verwendet. Die Anlage ist für die Bereitstellung niedrig temperierter Kälte aus niedrig temperierter Antriebswärme konzipiert. Sie arbeitet mit einer nachteilig investitionsaufwändigen,
komplexen Kälteverfahrenstechnik, die einen Dephlegmator und einen Kältemittelunterkühler enthält.

Der Dephlegmator ist ein Plate & Shell- Wärmeaustauscher. Die weiteren Wärmeaustauscher werden nicht näher spezifiziert. Die Durchführung des Wärme- und Stoffaustausches im Absorber, der als Rieselfilmapparat ausgebildet sei, wird nicht näher erläutert. Den Verdampfer durchströmt das Kältemittel zum Zwecke des Transportes von sogenanntem Restwasser von oben nach unten.

Die zuzuordnenden Bauteile Kältemittelunterkühler und Absorber befinden sich deshalb unterhalb des Verdampfers. Dies verursacht eine ungünstig große Bauhöhe der Anlage. Zum Betrieb des Verdampfers wird eine komplexe Regelung vorgeschlagen, welche die Differenz der Temperaturen des Kältemittels am Kondensatorausgang und am Ausgang des Kältemittelunterkühlers, d.h., am Absorbereingang als Regelgröße nutzt. Als Stellglied dient neben dem Expansionsventil, das dem Verdampfer zugeordnet ist, auch das Drosselventil, aus dem die arme Lösung dem Absorber zuströmt. Die Regelung des von der Lösungspumpe in Gang zu haltenden Lösungskreislaufes, wie im Übrigen diejenige der gesamten Anlage, wird nicht erläutert.

Eine Einrichtung zur Entspannung und Mischung fluider Medien, die bevorzugt bei der Vorbereitung und Durchführung von Sorptionsprozessen in Plattenwärmeübertragern anzuwenden sei, ist in der DE 197 34 131 beschrieben.

Zum Einsatz kommen zwei seit langer Zeit verfügbare, fachübliche Techniken, nämlich die Verteilung der ammoniakarmen Lösung über ein Rohr, welches Lochdüsen enthält, und die in Rieselabsorbern übliche Benetzung der Wärmeübertragungsflächen mit dem Gemisch aus Lösung und zu absorbierendem Stoff. Es wird vorgeschlagen, durch Eindüsung einen Misch- und Reaktionsprozess zwischen der Lösung und dem zu absorbierenden Stoff zu bewirken und das erzeugte Gemisch danach auf die Wärmeübertragungsfläche prallen zu lassen. Die erforderliche Verteilung auf die Kanäle des Plattenwärmeübertragers, die dortige Bildung dünner, die Wärmeübertragungsflächen lückenlos bedeckender, gekühlter Lösungsfilme, die das zu absorbierende Kältemittelgas ansaugen, und die dortige Wärme- und Stoffübertragung werden nicht dargelegt.

### Aufgabenstellung

Somit ergibt sich folgende erfinderische Aufgabenstellung:
Die Analyse des Standes der Technik belegt, dass die eingangs dargelegte bedarfsgerechte Anwendung der mit Wärme angetriebenen Ammoniak/Wasser-Absorptionskältetechnik nicht bekannt ist, dass vielmehr zur Realisierung dieser Technik neue Lösungen erforderlich sind, denen folgende Bedarfe zu Grunde liegen:
   - Verwendung von Antriebswärme, die unterhalb 100 °C, d.h. niedrig temperiert ist;
   - Vorrangige Erzeugung von Kälteleistungen unterhalb 0 °C, nur nachrangig oberhalb 0°C;
   - Produktion kleiner Kälteleistungen im Bereich 25 kW bis 100 kW für die Anwendung in dezentralen Energiesystemen;
   - Nach dem Prinzip "intelligent simplicity" gestaltete minimalisierte Kältetechnik, die im Gegensatz zu den bisher verfügbaren Lösungen mit sehr niedrigem investiven Aufwand realisiert werden kann, wobei wegen der Verwendung von Antriebswärme der Qualität einer Abwärme der mit dem Quotient COP= (Kälteleistung/Antriebswärmeleistung) zu bewertenden Effektivität nur nachrangige Bedeutung beigemessen wird und ein COP- Wert bis minimal 0,4 akzeptabel ist;
   - Eine im Gegensatz zu den bisher verfügbaren Lösungen wenig komplexe und mit einfachster Steuerungs- und Regelungstechnik ausgestattete Kältetechnik, die neben der guten Überschaubarkeit eine maximale Zuverlässigkeit bietet;
   - Die ausschließliche Verwendung von korrosionsfestem Edelstahl zur Gewährleistung einer langen Maschinenlebenszeit;
   - Realisierung des von der Lösungspumpe zu fördernden Lösungsumlaufs mit einem so geringen Aufwand an elektrischer Energie, dass das Einsparpotential der Absorptionskältemaschine nur unwesentlich geschwächt wird;
   - Einsatz einer Lösungspumpe mit einer geringen, durch den geforderten NPSH-Wert gekennzeichneten Kavitationsempfindlichkeit, die dem Umstand Rechnung trägt, dass die zu fördernde ammoniakreiche Lösung dem Siedezustand um so näher ist, je effektiver die Absorption des Ammoniaks im Absorber gelingt;
   - Die kostensenkende Verwendung von am Markt verfügbaren Komponenten;
   - Eine kompakte Gestaltung mit geringer Bauhöhe, Baumasse und Füllmenge, welche die Transportierbarkeit und die Aufstellbarkeit der werkseitig gefertigten, betriebsbereiten Kältemaschine ermöglicht.

Die innovative Erfüllung dieser Bedarfe im Sinne einer Weiterentwicklung des Standes der Technik zu einer funktionstüchtigen Kältemaschine sind das Problem und zugleich die Lösung, die der Erfindung zu Grunde liegen.

### Lösung der Aufgabenstellung

Die Lösung der Aufgabenstellung ist im Patentanspruch 1 angegeben.

Die untergeordneten Ansprüche enthalten zweckmäßige Ausgestaltungen.

Erfindungsgemäß wird eine Ammoniak/Wasser-Absorptionskältemaschine vorgeschlagen, die für Kälteleistungskapazitäten von 25 kW bis 100 kW, für Kälteträgertemperaturen unterhalb 0 °C und für Antriebswärme mit Heizfluidtemperaturen unterhalb 100 °C vorgesehen ist. Sie ist durch folgende Merkmale gekennzeichnet, nämlich:
- Ausschließliche Anordnung von gelöteten Plattenwärmeaustauschern fachüblicher Konstruktion;
- Anordnung von Kältetechnik in minimaler Konfiguration, bestehend aus den Komponenten Austreiber, Separator, Kondensator, Verdampfer mit vorgeschaltetem Expansionsventil, Absorber mit vorgeschaltetem Drosselventil, Lösungswärmeaustauscher und Lösungspumpe;
- Betrieb aller Wärmeaustauscher im Gegenstrom;
- Übernahme der Funktionen des Kältemittelsammlers und des Lösungssammlers durch die verbindenden Rohrleitungen;
- Herstellung aller vom Ammoniak und von der Ammoniak/Wasser- Lösung berührten Flächen aus korrosionsbeständigem Edelstahl.

Die vorgenannten Hauptmerkmale der erfindungsgemäßen Ammoniak/Wasser-Absorptionskältemaschine sind in zweckmäßiger Weise, wie nachfolgend ausgeführt technisch und apparativ realisierbar.

Der Ammoniakdampf und die ammoniakarme Lösung sind dem als Absorber verwendeten Plattenwärmeaustauscher im oberen Port, nämlich einem kreisrunden Eingangskanal, zuführbar, wobei der durch das vorgeschaltete Drosselventil geregelte Volumenstrom der ammoniakarmen Lösung erfindungsgemäß den vertikalen, bezüglich Zahl, Spaltweite, Breite und Länge entsprechend dimensionierten Plattenkanälen so zugeteilt wird, dass die Plattenflächen von einem dünnen, abwärts fließenden Flüssigkeitsfilm in der gesamten Breite, das heißt, vollständig benetzt werden, während der frei bleibende Raum im Plattenkanal die Zuströmung des vom Lösungsfilm angesaugten und absorbierten Kältemitteldampfes ermöglicht, was vorteilhaft durch die effektive Wirkverbindung der Stoffübertragungs- und der Wärmeübertragungsflächen unterstützt wird, der zur Folge die Temperatur des Lösungsfilms in Strömungsrichtung, also zum Kanalende hin, durch Wärmeabgabe an das im Gegenstrom geführte Kühlwasser sinkt und damit das Absorptionsvermögen der Lösung wegen der Unterkühlung und des verringerten Sättigungsdruckes trotz der Ammoniakanreicherung erhalten bleibt.

Die definierte Zufuhr der ammoniakarmen Lösung in die Plattenkanäle des Absorbers erfolgt mit Hilfe eines koaxial im oberen zylindrischen Port des Plattenwärmeaustauschers installierten Düsenrohres, aus dessen auf Mantellinien angeordneten Bohrungen die ammoniakarme Lösung parallel zu den Plattenflächen in die Plattenkanäle strömt, während alle Bohrungen auf Grund des gewählten einheitlichen, entsprechend klein bemessenen Durchmessers den gleichen Volumenstrom liefern und durch deren Anordnung auf mehreren Bohrungsreihen mit mindestens drei aufgefächerten Strahlen pro Kanal die vollständige filmartige Benetzung der Kanalflächen bewirken und während der im Verdampfer erzeugte Kältemitteldampf mit möglichst geringer Druckdifferenz in den Lösungsfilm des Absorbers gesaugt wird, weil der Portdurchmesser im Verhältnis zum Durchmesser des Düsenrohres ausreichend groß ist.

Dem Absorber ist ein stetig verstellbares Drosselventil vorgeschaltet, das den Zustrom der ammoniakarmen Lösung so einstellt, dass die als Regelgröße erfasste Zulaufhöhe der ammoniakreichen Lösung in der vom Absorber zur Lösungspumpe führenden großzügig dimensionierten Zuflussleitung auf einem vorzugebenden konstanten Wert hält, um damit der Kavitationsempfindlichkeit der Lösungspumpe sicher entgegenzuwirken.

Das aus dem Expansionsventil dem Verdampfer als Nassdampf zuströmende Kältemittel wird von unten nach oben durch die senkrechten Kanäle des Plattenwärmeaustauschers geführt, um diesen zur Realisierung einer reduzierten Maschinenhöhe neben dem Absorber und zur Realisierung einer möglichst geringen Druckverlust aufweisenden Kältemittelzuströmung besonders nah zum ansaugenden Absorbereingang platzieren zu können, wobei die Konzeption der Kältemaschine zur Folge hat, dass der zuströmende Nassdampf bis zu 5 % Masseanteile Wasser enthält und seine flüssige Phase deshalb unter Wärmeaufnahme bei gleitender Temperatur weiter verdampft, bis schließlich das Kältemittel mit einer restlichen, sehr ammoniakreichen flüssigen Phase, also immer noch als Nassdampf, dessen flüssige Phase allerdings einen sehr geringen Volumenanteil hat, den Verdampfer verlässt, wobei der erforderliche aufwärts gerichtete Transport der flüssigen Phase mit Hilfe einer definierten Nassdampfeinspritzung am Verdampfereingang und der in den Plattenkanälen ausreichend hoch zu realisierenden Strömungsgeschwindigkeit sicher gestellt ist und zugleich ein besonders wirksamer Wärmeübergang an die als sogenanntes Entrainment mitgerissenen Flüssigkeitströpfchen zustande kommt.

Dem Verdampfer ist zum Zweck der Regelung der Beaufschlagung mit Kältemittel ein stetig verstellbares Expansionsventil vorgeschaltet, welches über den durchströmenden Massenstrom als Stellgröße die Differenz zwischen der Eintritts- und der Austrittstemperatur als erfasste Regelgröße auf einem Wert konstant hält, der die geforderte Abkühlung des Kälteträgers bewirkt.

Die eingesetzte Regelungstechnik beschränkt sich neben der Ein- Aus- Schaltung der mit konstanter Drehzahl betriebenen Lösungspumpe im Sinne der minimalistischen Gestaltung auf die internen Regelungen der Verdampferbeaufschlagung und des Zuflusses der ammoniakarmen Lösung zum Absorber und damit auf alle Veränderungen, die die Wärmeübertragung vom Heizfluid des Austreibers, vom Kälteträger des Verdampfers sowie an das Kühlwasser im Kondensator und im Absorber betreffen, also auf alle dortigen Veränderungen der Massenströme und Temperaturen, ohne weitere Eingriffe, selbständig und ausreichend reagierend.

Die internen Regelungen der Verdampferbeaufschlagung und des Zuflusses der ammoniakarmen Lösung zum Absorber reagieren selbständig bei einer Änderung der Kälteträgerabkühlung von -3 °C / -6 °C auf +12 °C / +6 °C und ebenso selbständig und gleichzeitig bewirken sie, dass wegen des verringerten Temperaturhubes zwischen dem Kälteträger und dem Kühlwasser die Kälteleistung und der COP ansteigen.

Alternativ ist die Drehzahl der Lösungspumpe variierbar und damit der Massenstrom der ammoniakreichen Lösung, was eine Regelung der Kälteleistung ermöglicht, wobei eine Reduzierung der Pumpendrehzahl zur Reduzierung sowohl der Kälteleistung als auch der in Anspruch genommenen Heizleistung führt und wegen verringerter Grädigkeiten am Austreiber, Kondensator, Verdampfer und Absorber der COP steigt.

Als zweckmäßige Ausführung der Lösungspumpe ist eine hermetisch geschlossene, mit einer Magnetkupplung angetriebene, aus Edelstahl hergestellte einstufige Peripheralradpumpe einsetzbar, deren Laufrad mit einem als NPSH- Vorstufe wirkenden Radialrad in einem einzigen, durch Edelstahlguss hergestellten Bauteil verbunden ist.

Alternativ im Hinblick auf Kälteleistungen größer 25 kW und der hier zu fördernden größeren Volumenströme ist eine mittels Magnetkupplung hermetisch gestaltete, aus Edelstahl hergestellte mehrstufige Kreiselpumpe verwendbar, die mit offenen Laufrädern, d.h., mit Laufrädern ohne Deckscheiben arbeitet.

Für die hermetische Lösungspumpe kommt ein energieeinsparender Pumpenantrieb zum Einsatz, der mit einer Magnetkupplung und einem wirbelstromfreien Spalttopf, vorteilhaft aus PEEK Kunststoff, und zusätzlich einem hocheffizienten Asynchronmotor mit Softstart und Festdrehzahl oder einem hocheffizienten Synchronmotor mit Frequenzumrichter ausgestattet ist.

### Ausführungsbeispiel

Im nachstehenden Ausführungsbeispiel wird die Erfindung an Hand einer schematischen Darstellung der erfindungsgemäß in minimaler Konfiguration gestalteten Ammoniak/Wasser- Absorptionskältemaschine näher erläutert.

Alle vom Kältemittel 6, es enthält mehr als 95 % Masseanteile Ammoniak, und von der Ammoniak/Wasser- Lösung berührten Bauteile bestehen aus korrosionsbeständigem Edelstahl.

Alle Wärmeaustauscher, nämlich der Austreiber 3, der Kondensator 7, der Verdampfer 10, der Absorber 12 und der Lösungswärmeaustauscher 14 sind handelsüblich und kostengünstig verfügbare, sehr kompakt gebaute gelötete Plattenwärmeaustauscher, die jeweils im besonders wirksamen Gegenstrom betrieben werden.

Die ammoniakreiche Ammoniak/Wasser-Lösung, kurz ammoniakreiche Lösung 2, wird von der Lösungspumpe 1 über den Lösungswärmeaustauscher 14 zum Austreiber 3 gefördert. Sie wird hier nach der im Lösungswärmeaustauscher 14 erfolgten Vorwärmung in den senkrecht ausgerichteten Plattenkanälen aufwärts strömend zunächst bis zum Siedezustand erhitzt und dann bei weiter gleitender Temperatur zu Nassdampf, also nur teilweise, verdampft. Die dabei im Austreiber 3 erreichte Endtemperatur hängt ab vom Druck der ammoniakreichen Lösung 2, von der Vorlauftemperatur des Heizfluids 4, von der Dimensionierung des Plattenwärmeaustauschers und von der sich ergebenden Grädigkeit. Beträgt diese beispielsweise 7 K, so wird bei einer Heizfluid-Vorlauftemperatur von 95 °C die Endtemperatur 88 °C erreicht.

Der den Austreiber verlassende Nassdampf wird in einem in einfacher, fachüblicher Konstruktion gestalteten Separator 5 in die Phasen siedende Flüssigkeit und Sattdampf getrennt. Der Sattdampf besteht weitgehend aus Ammoniak, der flüchtigeren Komponente des binären Gemisches Ammoniak/Wasser. Er wird als sogenanntes Kältemittel 6 aufwärts zum Kondensator 7 gesaugt, um hier von oben nach unten die senkrecht ausgerichteten Plattenkanäle zu durchströmen und unter Wärmeabgabe an das Kühlwasser 8 zu kondensieren und sich dann etwa ein Grad unter die Kondensationstemperatur abzukühlen.

Die siedende Flüssigkeit, die sich im unteren Bereich des Separators 5 sammelt, ist die nach der Austreibung des Ammoniaks verbleibende ammoniakarme Lösung 13, die über den Lösungswärmeaustauscher 14 und ein Drosselventil 15, dem vorhandenen Druckgefälle folgend, zum Absorber 12 gelangt.

Der Druck im Kondensator 7, der weitgehend demjenigen im Austreiber 3 entspricht, wird durch die vom Wärmeübergang an das Kühlwasser 8 verursachte Kondensation des Kältemittels 6 bestimmt.

Soll die Kondensation, die wegen des Wasseranteiles bei gleitender Temperatur erfolgt, beispielsweise bei 27,5 °C gerade abgeschlossen sein, so beträgt der Kondensationsdruck 10,4 bar. Der bei diesem Druck und 88 °C im Austreiber abströmende Sattdampf hat dann den Ammoniak- Masseanteil 96,3 %.

Verallgemeinert besagt das Beispiel, dass die voraussetzungsgemäß niedrige Temperatur am Ende der Übertragung der Wärme an die ammoniakreiche Lösung 2 im Austreiber 3 eine so hohe Ammoniakkonzentration des ausgetriebenen Kältemitteldampfes zur Folge hat, dass sich eine anschließende Dephlegmation und Rektifikation erübrigt.

Dies begründet die erfindungsgemäße minimierte Gestaltung der Absorptionskältemaschine.

Das verflüssigte und geringfügig unterkühlte Kältemittel 6 sammelt sich im unteren Bereich des Kondensators 7 und in der Leitung, welche zum Expansionsventil 9 führt, das vor dem Verdampfer 10 angeordnet ist. Damit wird ersatzweise die Funktion eines sonst erforderlichen Sammlers erfüllt. Auch der hier mögliche Einsatz eines Kältemittelunterkühlers entfällt. Sein Weglassen bewirkt eine vorteilhafte Senkung der Absorptionstemperatur. Seine Verwendung dagegen würde eine nur geringfügige Verbesserung der Kältemaschineneffektivität bewirken, die den Investitionsaufwand nicht rechtfertigt.

Im Verdampfer 10 bewirkt der, wenn auch geringe, Wasseranteil im Kältemittel 6 einen gleitenden Temperaturanstieg bei der Verdampfung. Bezogen auf das bereits angeführte Betriebsbeispiel und dieses ausdehnend bedeutet das, dass bei einer vorgegebenen Kälteträgerabkühlung von -3°C auf -6°C das Kältemittel 6 nach der Drucksenkung im Expansionsventil 9 von 10,4 bar auf 2,7 bar als Nassdampf mit -11°C und 87 % Masseanteil siedender Flüssigkeit (mit 96 % Masseanteil Ammoniak), deren Volumenanteil 2 % beträgt, in den Verdampfer 10 eintritt und schließlich, immer noch als Nassdampf, mit -6°C austritt, hier aber mit nur noch 18 % Masseanteil siedender Flüssigkeit (mit 80 % Masseanteil Ammoniak), deren Volumenanteil neben der gasförmigen Phase (mit 100 % Masseanteil Ammoniak) 0,2 % beträgt. Die flüssige Phase wird im erfindungsgemäß gestalteten Verdampfer10, dessen senkrechte Plattenkanäle von unten nach oben vom Kältemittel 6 durchströmt werden, in Form von Flüssigkeitströpfchen sicher mittransportiert, was die gewählte Einspritztechnik am unteren Eintritt, die Gestaltung der Plattenkanäle und die hier erreichte Strömungsgeschwindigkeit sicherstellen. Der Transport der flüssigen Phase als sogenanntes Entrainment im aufwärts strömenden Nassdampf bewirkt einen besonders guten Wärmeübergang.

Ein noch wichtigerer Vorteil der aufwärts gerichteten Strömung ist es, dass der Verdampfer 10 direkt neben oder unter dem Absorber 12 platziert werden kann, um so die Bauhöhe der Kältemaschine gering zu halten und zusätzlich einen möglichst kurzen, mit nur geringem Druckverlust verbundenen Weg der Kältemittelzuströmung zum ansaugenden Absorbereingang zu realisieren.

Die Regelung der Beaufschlagung des Verdampfers 10 mit dem Kältemittel 6 erfolgt mit Hilfe des stetig verstellbaren Expansionsventils 9, welches den Massenstrom so einstellt, dass die Differenz zwischen der Eintritts- und der Austrittstemperatur als erfasste Regelgröße auf einem konstanten, vorzugebenden Wert gehalten wird.

Das Kältemittel strömt auf dem erfindungsgemäß sehr kurz gestalteten Weg zum Absorber 12, von dem es über eine entsprechend geringe Druckdifferenz durch Absorption angesaugt wird. Die Drücke im Absorber 12 und im Verdampfer 10 sind somit nahezu gleich. Sie werden bestimmt durch die Übertragung der Wärme aus dem Kälteträger 11 auf das Kältemittel 6 und durch die anschließende Absorption des Kältemittels 6 von der dem Absorber 12 zugeführten ammoniakarmen Lösung 13.

Die ammoniakarme Lösung 13 gelangt aus dem Austreiber 3 über den Separator 5, über den der Wärmerückgewinnung dienenden Lösungswärmeaustauscher 14 und über das Drosselventil 15 zum Absorber 12. Das stetig verstellbare Drosselventil 15 regelt den Zufluss. Im Absorber 12 entsteht dann unter Wärmeabfuhr an das Kühlwasser 8 durch Absorption des Kältemitteldampfes die ammoniakreiche Lösung 2. Der Kältemitteldampf und die ammoniakarme Lösung 13 werden dem als Absorber 12 verwendeten Plattenwärmeaustauscher im oberen Port, nämlich kreisrunden Eingangskanal, zugeführt. Der Volumenstrom der ammoniakarmen Lösung wird dabei erfindungsgemäß den vertikalen, bezüglich Zahl, Spaltweite, Breite und Länge entsprechend dimensionierten Plattenkanälen so zugeteilt, dass die Plattenflächen von einem dünnen, abwärts fließenden Flüssigkeitsfilm in der gesamten Breite, das heißt vollständig benetzt werden, während der frei bleibende Raum im Plattenkanal die Zuströmung des vom Lösungsfilm angesaugten und absorbierten Kältemitteldampfes ermöglicht. Die abzuführende Wärme wird an das im Gegenstrom geführte Kühlwasser 8 übertragen. Die effektive Wirkverbindung der Stoffübertragungs- und der Wärmeübertragungsflächen hat zur Folge, dass die Temperatur des Lösungsfilms in Strömungsrichtung, also zum Kanalende hin, durch Wärmeabgabe an das im Gegenstrom geführte Kühlwasser 8 sinkt und damit das Absorptionsvermögen der Lösung wegen der Unterkühlung und des verringerten Sättigungsdruckes trotz der Ammoniakanreicherung erhalten bleibt.

Die definierte Zufuhr der ammoniakarmen Lösung 13 in die Plattenkanäle des Absorbers 12 erfolgt erfindungsgemäß mit Hilfe eines koaxial im oberen zylindrischen Port des Plattenwärmeaustauschers installierten Düsenrohres, aus dessen auf Mantellinien angeordneten Bohrungen die ammoniakarme Lösung parallel zu den Plattenflächen in die Plattenkanäle strömt, während alle Bohrungen auf Grund des gewählten einheitlichen, entsprechend klein bemessenen Durchmessers den gleichen Volumenstrom liefern und durch deren Anordnung auf mehreren Bohrungsreihen mit mindestens drei aufgefächerten Strahlen pro Kanal die vollständige filmartige Benetzung der Kanalflächen bewirken. Dass der im Verdampfer 10 erzeugte Kältemitteldampf mit möglichst geringer Druckdifferenz in den Lösungsfilm des Absorbers 12 gesaugt wird, stellen die beschriebene räumliche Zuordnung von Verdampfer 10 und Absorber 12 sowie die Wahl des Düsenrohrdurchmessers deutlich kleiner als der Portdurchmesser sicher.

Die Regelung des Massenstromes der ammoniakreichen Lösung 2 in der Zuflussleitung 16 zur Lösungspumpe 1 erfolgt mit Hilfe des stetig verstellbaren Drosselventils 15. Dieses stellt die in den Absorber 12 strömende ammoniakarme Lösung 13 so ein, dass die als Regelgröße erfasste Zulaufhöhe der ammoniakreichen Lösung 2 in der vom Absorber 12 zur Lösungspumpe 1 führenden, großzügig dimensionierten Zuflussleitung 16 auf dem vorzugebenden konstanten Wert gehalten wird, um damit der Kavitationsempfindlichkeit der Lösungspumpe 1 sicher entgegenzuwirken.

Die tiefst möglich in der Absorptionskältemaschine angeordnete Lösungspumpe 1 ist in zweckmäßiger Ausführung eine mittels einer Magnetkupplung hermetisch geschlossene, aus Edelstahl hergestellte einstufige Peripheralradpumpe, deren Laufrad mit einem als NPSH- Vorstufe wirkenden Radialrad in einem einzigen, durch Edelstahlguss hergestellten Bauteil verbunden ist.

Alternativ im Hinblick auf Kälteleistungen größer 25 kW und der hier zu fördernden größeren Volumenströme ist in zweckmäßiger Ausführung eine mittels Magnetkupplung hermetisch gestaltete, aus Edelstahl hergestellte mehrstufige Kreiselpumpe verwendbar, die mit offenen Laufrädern, das heißt, mit Laufrädern ohne Deckscheiben arbeitet.

Die hermetisch ausgeführte Lösungspumpe 1 wird mit einem Elektromotor angetrieben, wobei eine besondere Einsparung elektrischer Antriebsenergie dadurch zustande kommt, dass die Magnetkupplung mit einem wirbelstromfreien Spalttopf, vorteilhaft aus PEEK-Kunststoff, ausgestattet ist und zusätzlich ein hocheffizienter Asynchronmotor mit Softstart und Festdrehzahl oder ein hocheffizienter Synchronmotor mit Frequenzumrichter verwendet wird. Auf diese Weise lässt sich der Bedarf an elektrischer Energie so gering halten, nämlich kleiner als 6 % der Kälteleistung, dass das Einsparpotential der Absorptionskältemaschine nur unwesentlich geschwächt wird.

Die Regelungstechnik der Ammoniak/Wasser- Absorptionskältemaschine beschränkt sich neben der Ein- Aus- Schaltung der mit konstanter Drehzahl betriebenen Lösungspumpe 1 im Sinne der minimalistischen Gestaltung auf die beschriebenen internen Regelungen der Verdampferbeaufschlagung und des Zuflusses der ammoniakarmen Lösung 13 zum Absorber 12. Diese Regelungstechnik reagiert ohne weitere Eingriffe selbständig und ausreichend auf alle Veränderungen, die die Wärmeübertragung vom Heizfluid 4 des Austreibers 3, vom Kälteträger 11 des Verdampfers 10, vom Kältemittel 6 im Kondensator 7 und von der sich bildenden ammoniakreichen Lösung 13 im Absorber 12 betreffen, also auf alle dortigen Veränderungen der Massenströme und Temperaturen. Dies ist zum Beispiel der Fall, wenn sich die Kälteträgerabkühlung von -3 °C / -6 °C auf +12 °C /+6 °C, wie sie bei der Gebäudekühlung üblich ist, ändert.

Hier steigen dann gleichzeitig und selbständig wegen des verringerten Temperaturhubes zwischen dem Kälteträger 11 und dem Kühlwasser 8 die Kälteleistung und der COP an. Eine alternative Regelungstechnik besteht schließlich darin, die Drehzahl der Lösungspumpe 1 und damit den Massenstrom der ammoniakreichen Lösung 2 in der Zuflussleitung 16 zur Lösungspumpe 1 zu variieren, um eine Regelung der Kälteleistung zu ermöglichen, wobei eine Reduzierung der Pumpendrehzahl sowohl zur Reduzierung der Kälteleistung als auch zur Reduzierung der in Anspruch genommenen Heizleistung führt und wegen verringerter Grädigkeiten am Austreiber (3), Kondensator (7), Verdampfer (10) und Absorber (12) der COP steigt.

### Bezugszeichenliste

- 1: Lösungspumpe, Hermetikpumpe mit Magnetkupplung und E-Motor,
- 2: ammoniakreiche Lösung,
- 3: Austreiber,
- 4: Heizfluid,
- 5: Separator,
- 6: Kältemittel,
- 7: Kondensator,
- 8: Kühlwasser,
- 9: Expansionsventil,
- 10: Verdampfer,
- 11: Kälteträger,
- 12: Absorber,
- 13: ammoniakarme Lösung,
- 14: Lösungswärmeaustauscher,
- 15: Drosselventil,
- 16: Zuflussleitung (zur Lösungspumpe 1).

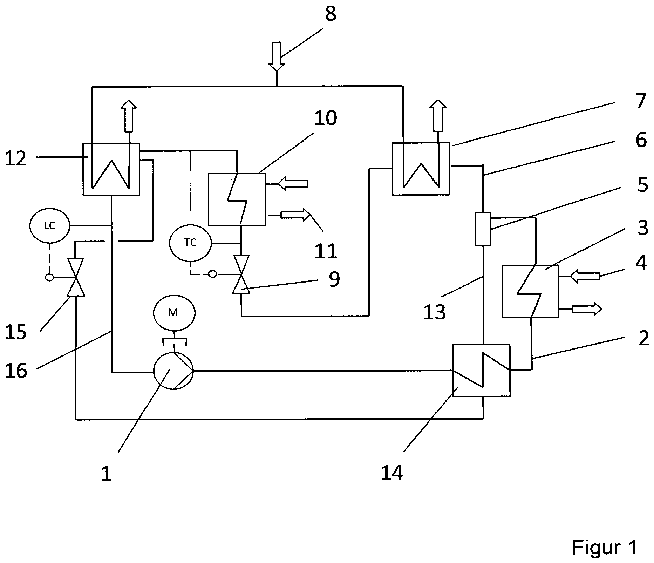

## Patentansprüche

1. Ammoniak/Wasser- Absorptionskältemaschine, vorgesehen für Kälteleistungskapazitäten von 25 kW bis 100 kW, für Kälteträgertemperaturen unterhalb 0 °C und für Antriebswärme mit Heizfluidtemperaturen unterhalb 100 °C,
**gekennzeichnet durch** folgende Merkmale:
- Ausschließliche Anordnung von gelöteten Plattenwärmeaustauschern fachüblicher Konstruktion;
- Anordnung von Kältetechnik in minimaler Konfiguration, nämlich bestehend aus den Komponenten Austreiber (3), Separator (5), Kondensator (7), vom Kältemittel (6) senkrecht von unten nach oben durchströmter Verdampfer (10) mit vorgeschaltetem geregeltem Expansionsventil (9), von der ammoniakarmen Lösung (13) durch ein Düsenrohr im oberen Port beaufschlagter Absorber (12) mit vorgeschaltetem geregeltem Drosselventil (15), Lösungswärmeaustauscher (14) und Lösungspumpe (1);
- Betrieb aller Wärmeaustauscher, nämlich Austreiber (3), Kondensator (7), Verdampfer (10), Absorber (12) und Lösungswärmeaustauscher (14) im Gegenstrom;
- Übernahme der Funktionen des Kältemittelsammlers und des Lösungssammlers durch die verbindenden Rohrleitungen;
- Herstellung aller vom Ammoniak und von der Ammoniak/Wasser- Lösung berührten Flächen aus korrosionsbeständigem Edelstahl.

2. Ammoniak/Wasser- Absorptionskältemaschine nach Anspruch 1,
**dadurch gekennzeichnet, dass** das Kältemittel (6) und die ammoniakarme Lösung (13) dem als Absorber (12) verwendeten Plattenwärmeaustauscher im oberen Port, nämlich kreisrunden Eingangskanal, zuführbar sind, wobei der durch das vorgeschaltete Drosselventil (15) geregelte Volumenstrom der ammoniakarmen Lösung (13) den vertikalen, bezüglich Zahl, Spaltweite, Breite und Länge entsprechend dimensionierten Plattenkanälen so zugeteilt ist, dass die Plattenflächen von einem dünnen, abwärts fließenden Flüssigkeitsfilm in der gesamten Breite vollständig benetzt werden, während der frei bleibende Raum im Plattenkanal die Zuströmung des vom Lösungsfilm angesaugten und absorbierten Kältemitteldampfes ermöglicht, unterstützt durch die effektive Wirkverbindung der Stoffübertragungs- und der Wärmeübertragungsflächen, der zur Folge die Temperatur des Lösungsfilms in Strömungsrichtung, also zum Kanalende hin, durch Wärmeabgabe an das im Gegenstrom geführte Kühlwasser (8) sinkt und damit das Absorptionsvermögen der Lösung wegen der Unterkühlung und des verringerten Sättigungsdruckes trotz der Ammoniakanreicherung erhalten bleibt.

3. Ammoniak/Wasser- Absorptionskältemaschine nach Anspruch 1,
**dadurch gekennzeichnet, dass** die definierte Zufuhr der ammoniakarmen Lösung (13) in die Plattenkanäle des Absorbers (12) mit Hilfe eines koaxial im oberen zylindrischen Port des Plattenwärmeaustauschers installierten Düsenrohres realisiert ist, aus dessen auf Mantellinien angeordneten Bohrungen die ammoniakarme Lösung parallel zu den Plattenflächen in die Plattenkanäle strömt, während alle Bohrungen auf Grund des gewählten einheitlichen, entsprechend klein bemessenen Durchmessers den gleichen Volumenstrom liefern und durch deren Anordnung auf mehreren Bohrungsreihen mit mindestens drei aufgefächerten Strahlen pro Kanal die vollständige filmartige Benetzung der Kanalflächen bewirken und während der im Verdampfer erzeugte Kältemitteldampf mit möglichst geringer Druckdifferenz in den Lösungsfilm des Absorbers gesaugt wird, weil der Portdurchmesser im Verhältnis zum Durchmesser des Düsenrohres ausreichend groß ist.

4. Ammoniak/Wasser- Absorptionskältemaschine nach Anspruch 1,
**dadurch gekennzeichnet, dass** dem Absorber (12) ein stetig verstellbares Drosselventil (15) vorgeschaltet ist, welches den Zustrom der ammoniakarmen Lösung (13) so einstellt, dass die als Regelgröße erfasste Zulaufhöhe der ammoniakreichen Lösung (2) in der vom Absorber (12) zur Lösungspumpe (1) führenden, großzügig dimensionierten Zuflussleitung (16) auf einem vorzugebenden konstanten Wert hält, um damit der Kavitationsempfindlichkeit der Lösungspumpe sicher entgegenzuwirken.

5. Ammoniak/Wasser- Absorptionskältemaschine nach Anspruch 1,
**dadurch gekennzeichnet, dass** das aus dem Expansionsventil (9) dem Verdampfer (10) Nassdampf als zuströmende Kältemittel (6) von unten nach oben durch die senkrechten Kanäle des Plattenwärmeaustauschers geführt wird, um diesen zur Realisierung einer reduzierten Maschinenhöhe neben dem Absorber (12) und zur Realisierung einer möglichst geringen Druckverlust aufweisenden Kältemittelzuströmung besonders nah zum ansaugenden Absorbereingang platzieren zu können, wobei die Konzeption der Kältemaschine zur Folge hat, dass das dem Verdampfer zuströmende Kältemittel bis zu 5 % Masseanteil Wasser enthält und seine flüssige Phase deshalb unter Wärmeaufnahme bei gleitender Temperatur weiter verdampft, bis schließlich das Kältemittel mit einer restlichen, sehr ammoniakreichen flüssigen Phase, immer noch als Nassdampf, dessen flüssige Phase allerdings einen sehr geringen Volumenanteil hat, den Verdampfer verlässt,
wobei der erforderliche aufwärts gerichtete Transport der flüssigen Phase mit Hilfe einer definierten Nassdampfeinspritzung am Verdampfereingang und der in den Plattenkanälen ausreichend hoch zu realisierenden Strömungsgeschwindigkeit sicher gestellt ist und zugleich ein besonders wirksamer Wärmeübergang an die als sogenanntes Entrainment mitgerissenen Flüssigkeitströpfchen zustande kommt.

6. Ammoniak/Wasser- Absorptionskältemaschine nach Anspruch 1,
**dadurch gekennzeichnet, dass** dem Verdampfer (10) zum Zweck der Regelung der Beaufschlagung mit Kältemittel (6) ein stetig verstellbares Expansionsventil (9) vorgeschaltet ist, welches über den durchströmenden Massenstrom als Stellgröße die Differenz zwischen der Eintritts- und der Austrittstemperatur als erfasste Regelgröße auf einem Wert konstant hält, der die geforderte Abkühlung des Kälteträgers (11) bewirkt.

7. Ammoniak/Wasser- Absorptionskältemaschine nach den Ansprüchen 1, 4 und 6, **dadurch gekennzeichnet, dass** sich die eingesetzte Regelungstechnik neben der Ein-Aus- Schaltung der mit konstanter Drehzahl betriebenen Lösungspumpe (1) im Sinne der minimalistischen Gestaltung auf die internen Regelungen der Verdampferbeaufschlagung und des Zuflusses der ammoniakarmen Lösung (13) zum Absorber (12) beschränkt und damit auf alle Veränderungen, die die Wärmeübertragung vom Heizfluid (4) des Austreibers (3), vom Kälteträger (11) des Verdampfers (10) sowie an das Kühlwasser (8) im Kondensator (7) und im Absorber (12) betreffen, auf alle dortigen Veränderungen der Massenströme und Temperaturen, ohne weitere Eingriffe, selbständig und ausreichend reagiert.

8. Ammoniak/Wasser- Absorptionskältemaschine nach den Ansprüchen 1 und 7, **dadurch gekennzeichnet, dass** die internen Regelungen der Verdampferbeaufschlagung und des Zuflusses der ammoniakarmen Lösung (13) zum Absorber (12) bei einer Änderung der Kälteträgerabkühlung von -3 °C / -6 °C auf +12 °C / +6 °C selbständig reagieren und ebenso selbständig gleichzeitig bewirken, dass wegen des verringerten Temperaturhubes zwischen dem Kälteträger (11) und dem Kühlwasser die Kälteleistung und der COP ansteigen.

9. Ammoniak/Wasser- Absorptionskältemaschine nach den Ansprüchen 1 und 7, **dadurch gekennzeichnet, dass** die Drehzahl der Lösungspumpe (1) und damit der Massenstrom der ammoniakreichen Lösung (2) in der Zuflussleitung (16) variierbar ist, um eine Regelung der Kälteleistung zu ermöglichen, wobei eine Reduzierung der Pumpendrehzahl sowohl zur Reduzierung der Kälteleistung als auch zur Reduzierung der in Anspruch genommenen Heizleistung führt und wegen verringerter Grädigkeiten am Austreiber (3), Kondensator (7), Verdampfer (10) und Absorber (12) der COP steigt.

10. Ammoniak/Wasser- Absorptionskältemaschine nach Anspruch 1, **dadurch gekennzeichnet, dass** als Lösungspumpe (1) eine hermetisch geschlossene, mit einer Magnetkupplung angetriebene, aus Edelstahl hergestellte einstufige Peripheralradpumpe einsetzbar ist, deren Laufrad mit einem als NPSH- Vorstufe wirkenden Radialrad in einem einzigen, durch Edelstahlguss hergestellten Bauteil verbunden ist.

11. Ammoniak/Wasser-Absorptionskältemaschine nach den Ansprüchen 1 und 10, **dadurch gekennzeichnet, dass** im Hinblick auf Kälteleistungen größer 25 kW und der hier zu fördernden größeren Volumenströme eine mittels Magnetkupplung hermetisch gestaltete, aus Edelstahl hergestellte mehrstufige Kreiselpumpe (1) verwendbar ist, die mit offenen Laufrädern, d.h., mit Laufrädern ohne Deckscheiben arbeitet.

12. Ammoniak/Wasser- Absorptionskältemaschine, nach den Ansprüchen 1, 10 und 11, **dadurch gekennzeichnet, dass für** die hermetische Lösungspumpe (1) ein energieeinsparender Pumpenantrieb zum Einsatz kommt, der mit einer Magnetkupplung und einem wirbelstromfreien Spalttopf, vorteilhaft aus PEEK Kunststoff, und zusätzlich einem hocheffizienten Asynchronmotor mit Softstart und Festdrehzahl oder einem hocheffizienten Synchronmotor mit Frequenzumrichter ausgestattet ist.
